# EUROPEAN PATENT APPLICATION

(11) **EP 2 093 040 A1**
(43) Date of publication of application: **26.08.2009**
(21) Application number: 08425111.5
(22) Date of filing: 22.02.2008
(51) Int. Cl.: B29C 45/16, F28F 9/02

(54) **Method for manufacturing a tank of a heat exchanger, and tank obtained using said method**

(71) Applicant: DENSO THERMAL SYSTEMS S.p.A., 10046 Poirino (Torino) (IT)
(72) Inventor: Audello, Giovanni, 10046 Poirino (Torino) (IT); Panizza, Manuela, 10046 Poirino (Torino) (IT)
(74) Representative: Marchitelli, Mauro

(57) **Abstract**

A method for manufacturing a tank made of plastic material of a heat exchanger, provided with a gasket made of elastomeric material on a perimetral edge thereof. The method comprises the steps of: injecting a first plastic material in a first-injection seat (22) with a first slider (24), a second slider (30), and a third slider (32) in respective positions of first injection, solidifying the injected plastic material, displacing the first slider (24), second slider (30), and third slider (32) towards respective positions of second injection, and injecting elastomeric material in a second-injection seat (44, 38) formed by the movement of said first slider (24), said second slider (30), and said third slider (32) towards the respective positions of second injection.

## Description

The present invention relates to heat exchangers for vehicles, and regards a heat exchanger tank made of injection-moulded plastic material and provided with a gasket made of elastomeric material anchored in a permanent way on an open edge of the tank.

The document No. US-B1-6238610 describes an apparatus and a method for producing a tank of a heat exchanger. According to this method, a tank having, on a perimetral edge thereof, a continuous groove with undercut cross section is first injection-moulded. Next, in a second moulding apparatus, a gasket made of elastomeric material having a root portion that extends within said groove with undercut cross section is injected. This method requires two moulding apparatuses: a first apparatus for injection moulding of the tank and a second apparatus for injection moulding of the gasket on the tank.

The object of the present invention is to provide a method that will enable a tank with integral gasket to be obtained in a single moulding step.

According to the present invention, said object is achieved by a method having the characteristics forming the subject of Claim 1.

The characteristics and advantages of the present invention will emerge clearly from the ensuing detailed description, which is provided purely by way of nonlimiting example, with reference to the annexed drawings, in which:
- Figures 1-6 are schematic cross sections illustrating the method according to the present invention;
- Figure 7 is a partial perspective view of the part indicated by the arrow VII in Figure 6;
- Figure 8 is a perspective view of the part illustrated in Figure 7 without the gasket; and
- Figures 9 and 10 are sections according to the lines IX-IX and X-X, respectively, of Figure 7.

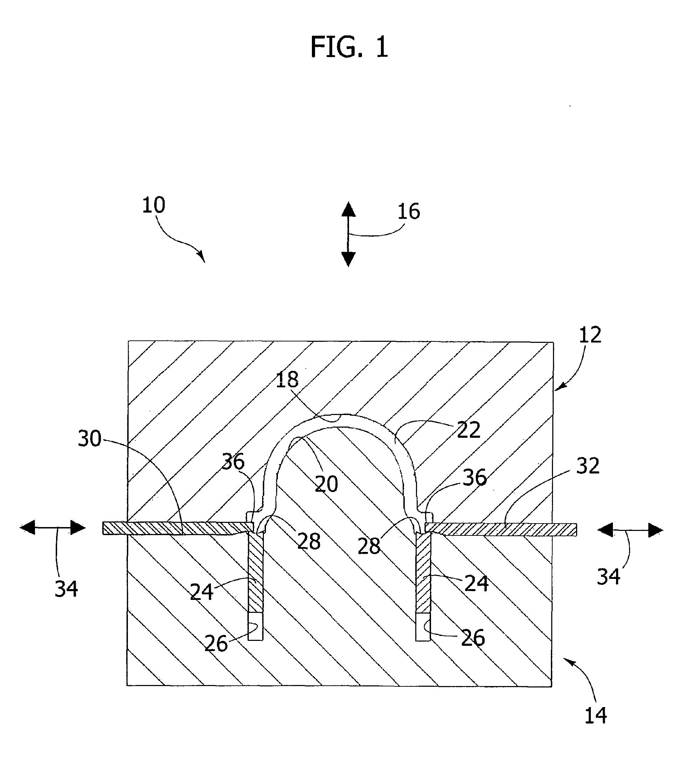

With reference to the drawings, designated by 10 is an apparatus for moulding the tank of a heat exchanger according to the present invention. The apparatus 10 comprises a first half-mould 12 and a second half-mould 14, which are mobile with respect to one another in a direction of opening/closing indicated by the arrow 16. The first and second half-moulds 12, 14 have respective active moulding surfaces 18, 20, which, in the closed position of the half-moulds 12, 14, define an injection-moulding cavity 22 (Figure 1).

The moulding apparatus 10 comprises a first slider 24 slidably housed in a seat 26 formed in the second half-mould 14. The first slider 24 is mobile with respect to the second half-mould 14 in a direction parallel to the direction of opening/closing 16 between a position of first injection and a position of second injection. The first slider 24 has an active surface 28 that delimits the moulding cavity 22 along a continuous perimetral edge.

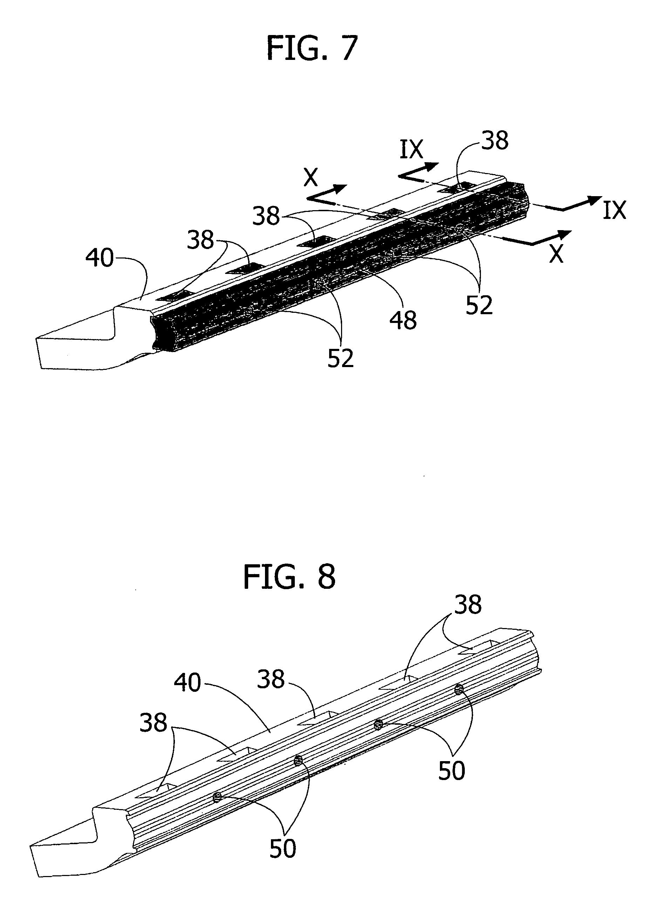

The moulding apparatus 10 moreover comprises a second slider 30 and a third slider 32, each of which is mobile in a direction 34 orthogonal to the direction of opening/closing 16. The second and third sliders 30, 32 are both mobile between a position of first injection and a position of second injection. In the position of first injection, the second and third sliders 30, 32 have respective ends 36 that penetrate within the moulding cavity 22. With reference to Figure 8, the ends 36 of the second and third sliders 30, 32 have the purpose of forming seats 38 set at a distance from one another in a longitudinal direction along the perimetral outer side edge 40 of the tank.

The method for manufacturing the tank according to the present invention will now be described with reference to Figures 1-6.

Figure 1 shows the two half-moulds 12, 14 in the closed position. The first, second, and third sliders 24 are located in the respective positions of first injection.

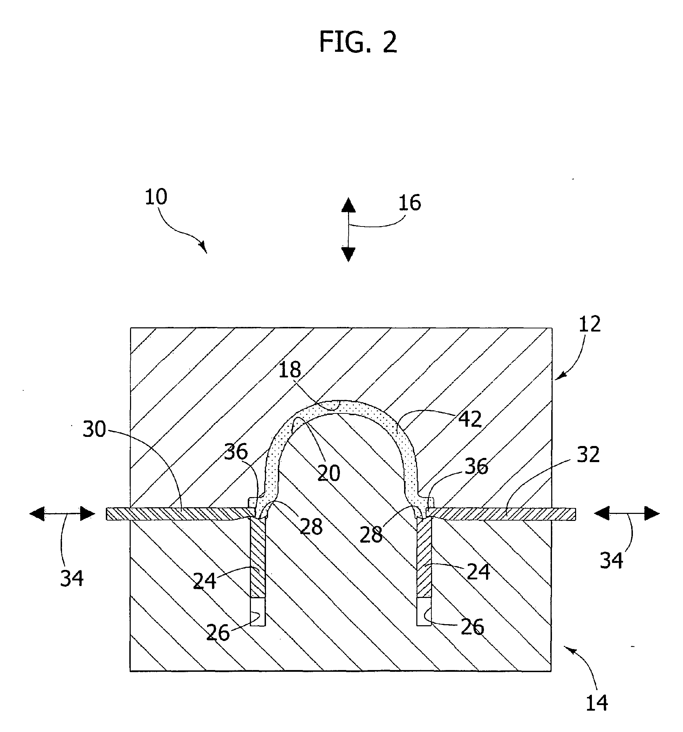

With the apparatus 10 in this configuration, a first injection of plastic material is made in the moulding cavity 22. Figure 2 shows the apparatus 10 at the end of this first injection. The cavity 22 is filled with a relatively stiff plastic material that forms the body 42 of the tank. The plastic material 42 is made to solidify by keeping the half-moulds 12, 14 in the closed position and the first slider 24, the second slider 30 and the third slider 32 in the position of first injection.

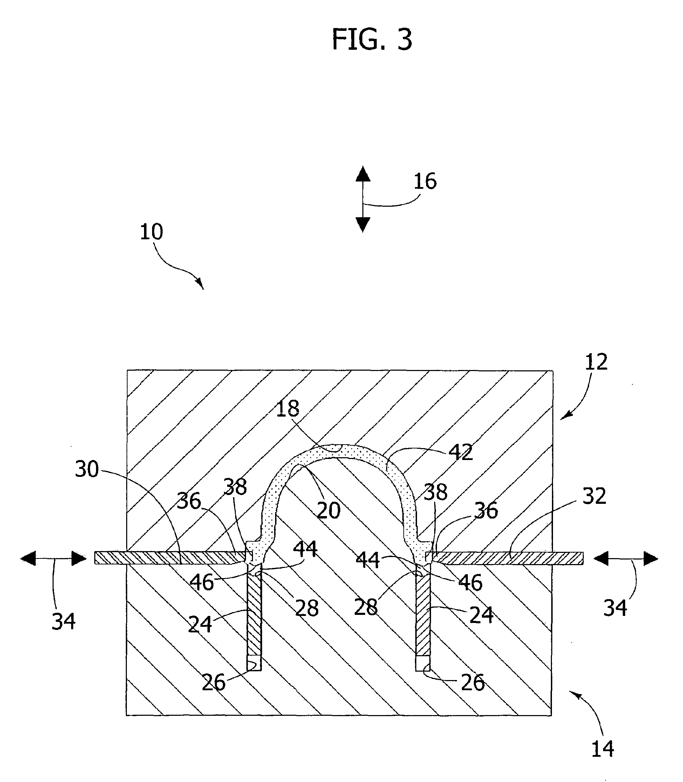

After solidification of the plastic material forming the body 42 of the tank, the sliders 24, 30, 32 are brought into the respective positions of second injection, as represented in Figure 3. In this position of the sliders, the second-injection seat is formed, made up of two distinct and communicating portions 44, 38. The seat 44 is defined between the edge 28 of the first slider 24 and the facing edge 46 of the body of the tank 42. The displacement of the second and third sliders 30, 32 into the position of second injection moreover forms the seats 38 (Figure 8) on the longitudinal perimetral edge 40 of the body of the tank 42, said seats also concurring to form the second-injection seat. The seats 38 communicate with the seats 44 and, together with these make up the second-injection seat.

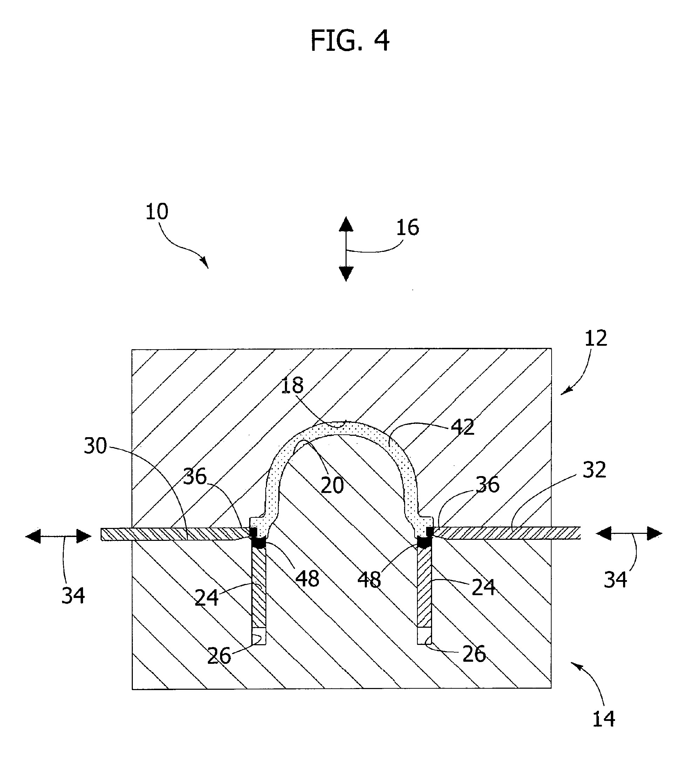

In the next step (illustrated in Figure 4), an injectable elastomeric material is injected into the second-injection seat 44, 38. The material injected in this second injection adheres to the edge 46 of the body of the tank 42 and fills the seats 38. The elastomeric material injected in the seat 44 forms a continuous gasket 48 made of elastomeric material that extends continuously along the open edge of the body of the tank 42.

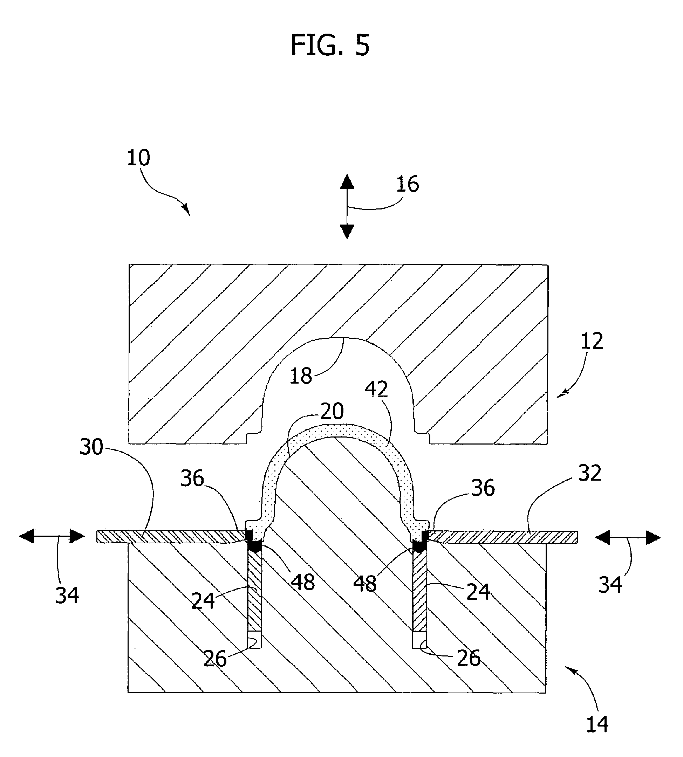

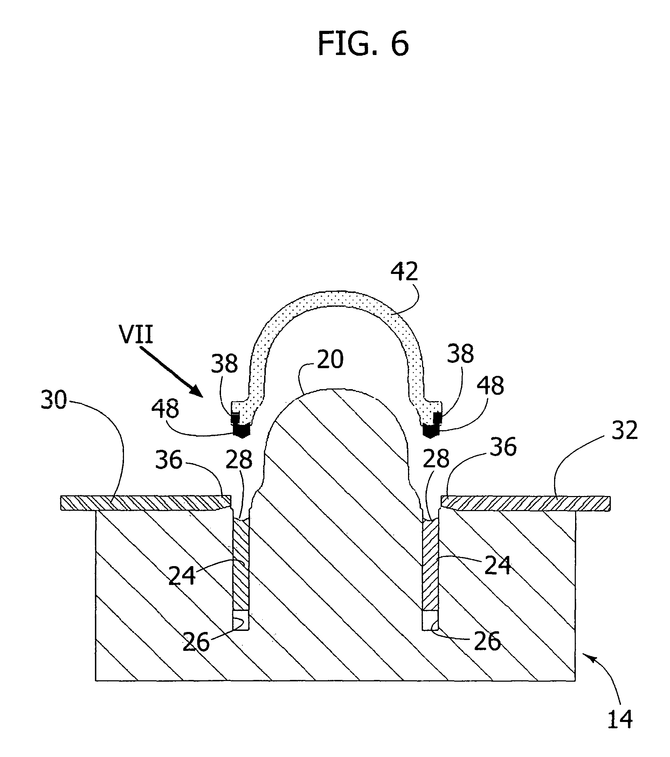

Next, the half-moulds 12, 14 are opened, as illustrated in Figure 5, and the finished tank is extracted, as illustrated in Figure 6.

Figure 7 shows an enlarged detail of the gasket made of elastomeric material 48 formed on the open edge of the body of the tank 42. The seats 38 enable mechanical engagement of the gasket 48 to the edge 40 of the body of the tank 42.

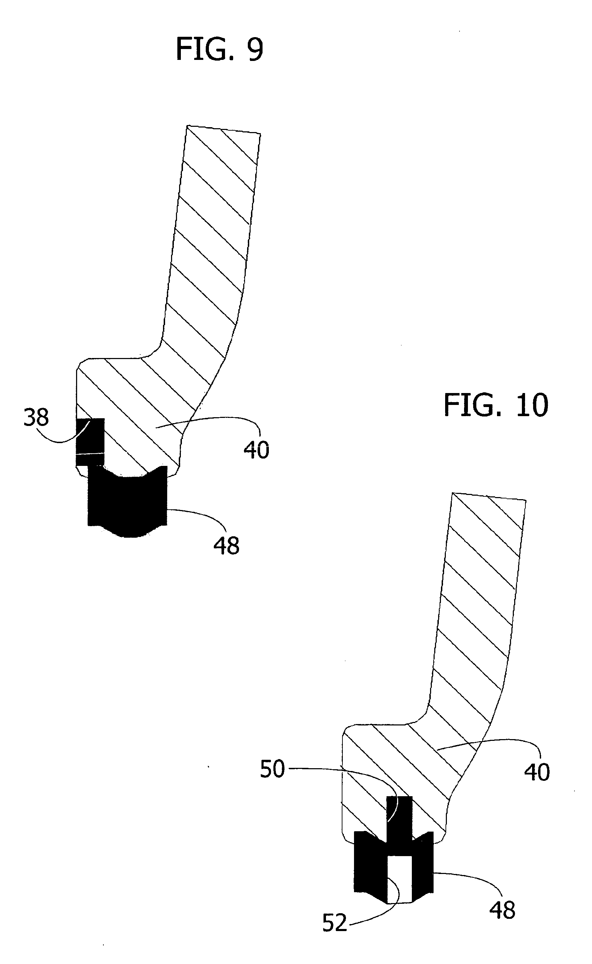

To improve further engagement of the gasket to the body of the tank, along the front edge 46 of the tank there can be made holes 50 with axis parallel to the direction of opening/closing 16 of the half-moulds 12, 14. The holes 50 are preferably set in positions intermediate between successive seats 38. The holes 50 are made by pins (not illustrated) projecting from the edge 28 of the first slider. Said pins also make corresponding holes 52 in the gasket 48, as illustrated in Figures 7 and 10.

The solution according to the present invention differs considerably from a traditional process of bi-injection in so far as no movement of opening of the mould is necessary between the first and second injection steps, and replacements of mould parts are not necessary either. This enables a considerable reduction in the overall dimensions of the mould and in its cost (approximately 50%). The solution according to the invention moreover enables an equally considerable reduction in the dimensions and tonnage of the press associated to the moulding apparatus 10 to be obtained. In fact, instead of a specific press for bi-injection, a traditional press provided with a small satellite injector mounted directly on the mould is sufficient.

The system according to the present invention, as compared to the system of overmoulding described in the document No. US6238610, in addition to being faster and less expensive, eliminates completely the risk of formations of cracks on the outer edge of the body of the tank. In fact, it is not necessary to exert pressure on the body of the tank with metal mould parts.

The invention is not limited to the specific details illustrated by way of example and is applicable to tanks with bi-injected gaskets having any geometry of the profile of the gasket and of the seats 38.

## Claims

1. A method for manufacturing a tank made of plastic material of a heat exchanger provided with a gasket made of elastomeric material on a perimetral edge thereof, in which the tank (42) is obtained by means of injection moulding in a moulding apparatus (10) comprising a first half-mould (12) and a second half-mould (14) having respective moulding surfaces (18, 20), which are mobile with respect to one another between an open position and a closed position in a direction of opening/closing (16), in which said moulding surfaces (18, 20) in said closed position define a first-injection-moulding cavity (22),
said method being **characterized in that** the moulding apparatus (10) comprises at least one first slider (24), which is mobile with respect to one of said half-moulds (14) in a rectilinear direction parallel to said direction of opening/closing (16) between a position of first injection and a position of second injection, the apparatus comprising at least one second slider (30) and at least one third slider (32), which are mobile in a rectilinear direction (34) orthogonal to said direction of opening/closing (16) between a position of first injection and a position of second injection, the method comprising the steps of injecting a plastic material in the first-injection seat (22) with said first slider (24), said second slider (30), and said third slider (32) in the respective positions of first injection, solidifying the injected plastic material, displacing said first slider (24), said second slider (30), and said third slider (32) towards the respective positions of second injection whilst keeping the first and second half-moulds (12, 14) in a closed position, and injecting an elastomeric material in a second-injection seat(44, 38) formed by the movement of said first slider (24), said second slider (30), and said third slider (32) towards the respective positions of second injection.

2. The method according to Claim 1, **characterized in that** said second and third sliders (30, 32) form a plurality of seats (38) set at a distance from one another along an outer perimetral edge of the tank (42).

3. The method according to Claim 2, **characterized in that** the elastomeric material injected in said second injection seat (44, 38) fills said seats (38).

4. A tank for a heat exchanger, comprising a body made of a first injected plastic material (42) and a gasket made of elastomeric material (48) formed on a front edge (46) of said body of the tank (42), said tank being **characterized in that** it comprises a plurality of seats (38) set at a distance from one another and formed on an outer perimetral edge (40) of the body of the tank (42), said seats (38) being filled with the elastomeric material that forms said gasket (48) and having the function of guaranteeing adhesion of the gasket (48) to the body of the tank (42).

5. The tank according to Claim 5, **characterized in that** it comprises a plurality of holes (50) formed in said front edge (46) of the body of the tank (42), set in a direction orthogonal to said seats (38) and filled with the elastomeric material forming said gasket (48).
